# EUROPEAN PATENT APPLICATION

(11) **EP 4 708 815 A1**
(43) Date of publication of application: **11.03.2026**
(21) Application number: 25198018.1
(22) Date of filing: 26.08.2025
(51) Int. Cl.: H04L 65/80, H04L 69/14, H04L 69/16, H04L 69/163, H04L 49/90

(54) **ONE-TO-MANY TCP CONNECTION SPLICING**

(30) Priority: 30.08.2024 FI 20246081
(71) Applicant: Nokia Solutions and Networks Oy, 02610 Espoo (FI)
(72) Inventor: CHANG, Hyunseok, Holmdel (US); MUKHERJEE, Sarit, Murray Hill (US); WANG, Limin, Plainsboro (US)
(74) Representative: Nokia EPO representatives

(57) **Abstract**

A computing device includes at least one network interface controller (NIC), a memory, and at least one processor including one or more cores. The NIC(s) receive inbound Transmission Control Protocol (TCP) packets and transmit outbound TCP packets. The memory stores a program of instructions, which the processor executes to split a datapath including both receive endpoints and transmit endpoints within the computing device into a first path and a second path. The processor assigns first inbound TCP packets to the first path in response to determining that the first inbound TCP packets are associated with an established TCP connection and a data splicing group, and assigns second inbound TCP packets not assigned to the first path to the second path. The processor uses the first path to perform one-to-many data splicing of payload data from the first inbound TCP packets into the outbound TCP packets.

## Description

### TECHNICAL FIELD

This application relates generally to one-to-many connection splicing, and more particularly to one-to-many Transmission Control Protocol (TCP) connection splicing.

### BACKGROUND

One-to-many communications are used in a variety of data center applications. For example, commercial web-scale services often depend on distributed event streaming services that dynamically route data from a single source to multiple consumer entities. In distributed storage systems, write operations on a file are replicated to other nodes for fault tolerance. One-to-many communication is also used in content delivery networks (CDNs) for distribution of media to a wider audience, in mixed and virtual reality applications that synchronize views and states among participants for immersive experiences, and in videoconferencing systems that support multi-party communication in real time. Each of these applications replicates an incoming data stream to multiple receiving entities at various scales.

### SUMMARY

The scope of protection sought for some example embodiments is set out by the independent claims. The example embodiments and/or features, if any, described in this specification that do not fall under the scope of the independent claims are to be interpreted as examples useful for understanding some embodiments.

In various conventional implementations of one-to-*N* data splicing, significantly increased performance overhead is incurred as *N* increases, leading to potential scalability bottlenecks in traditional Transmission Control Protocol (TCP) application deployment environments. Various example embodiments disclosed herein alleviate this, and other potential performance issues, by splitting the datapath into a fast path and a slow path. To reduce memory copy overhead on the fast path, shallow memory copy may be used in conjunction with scatter-gather capability of certain Network Interface Controllers (NICs), to achieve "zero-copy one-to-N packet transmission." In some example embodiments, CPU utilization of fast path and slow path activity may be scaled independently, by adjusting respective CPU core assignments. Such scaling may result in overall reduction of message latency and increased maximum message throughput.

In some conventional systems, when messages are received via TCP, the messages are held in the TCP stack's socket buffer, subsequently copied to an application's memory space, and finally consumed by the application via socket APIs. Outgoing messages undergo similar steps in reverse. In conventional systems implementing such a system, for each data packet received, there will be (*N* +1) memory copies of the packet payload between the protocol stack's socket buffer and the application, and *N* additional copies while generating *N* full packets with IP/TCP headers for transmission. If the TCP stack is operated in the privileged kernel, it will incur additional system call overhead due to frequent user-to-kernel mode changes during data splicing.

Various example embodiments disclosed herein reduce or eliminate the need to make multiple copies to an application's memory space, and other scalability bottlenecks associated with conventional systems. In some example embodiments, improved efficiency and scalability of one-to-many TCP data splicing within a local server may be achieved by using a split cross-layer datapath; zero-copy, NIC-assisted data splicing; dynamic load-rebalancing; or some combination of these techniques.

In implementing a split cross-layer datapath, some example embodiments use a unified application-network datapath in which TCP protocol stack processing is integrated into application-level data splicing. To optimize the unified cross-layer datapath for performance, the datapath may be split into a fast path and a slow path. The fast path is dedicated to performing common-case one-to-many data splicing across fully established TCP connections, while the slow path handles any remaining, uncommon TCP-level and application-level events, such as TCP connection setup and application-level session creation.

With respect to zero-copy, NIC-assisted data splicing, one-to-N data splicing on the fast path requires some way for multiple copies of a payload from an ingress (RX) packet to be inserted into multiple egress (TX) packets. To minimize memory copy overhead, some example embodiments use a shallow memory copy, which avoids copying a payload across TCP connections. The term "shallow memory copy," "shallow copy," "reference copy," and similar terms are used herein to refer to a process in which a reference counter to a shared memory buffer is incremented. This is in contrast to deep memory copy, where the content of a given memory buffer is duplicated at another memory location. The shallow memory copy may be used in conjunction with a NIC's scatter-gather capability, to achieve zero-copy one-to-N packet transmission. A NIC's scatter-gather capability allows a NIC to obtain payload data from the shared memory buffer using the reference counter.

With respect to dynamic load rebalancing, note that different traffic patterns may introduce processing overhead to the fast path and slow path disproportionately. Thus, some example embodiments monitor the CPU utilization of the fast path and slow path, and scale the fast path and the slow path independently by adjusting their respective CPU core assignments. In addition, due to the skewed nature of data splicing rates and splicing group sizes, a NIC's Receive Side Scaling (RSS)-driven data distribution may lead to unbalanced load distribution across different CPU cores assigned to the fast path. To address load imbalance within the fast path, some example embodiments, incrementally redistribute flows among available CPU cores upon detecting any unbalanced utilization. In one or more example embodiments, flow redistribution includes installing flow-steering rules in the NIC that move the processing of the top-K biggest flows from the most congested CPU core to the least busy core, and migrating corresponding flow states.

In some example embodiments, a computing device includes: at least one network interface controller configured to receive a plurality of inbound Transmission Control Protocol (TCP) packets, and transmit a plurality of outbound TCP packets; a memory configured to store a program of instructions; and at least one processor including one or more cores, the at least one processor being coupled to the at least one network interface controller and the memory, the at least one processor being configured to execute the program of instructions to split a datapath including both receive endpoints and transmit endpoints within the computing device into a first path (*e.g.* a fast path) and a second path (*e.g.* a slow path), assign first inbound TCP packets to the first path in response to determining that the first inbound TCP packets are associated with an established TCP connection and a data splicing group, assign second inbound TCP packets not assigned to the first path to the second path, and perform, using the first path, one-to-many data splicing, of payload data from the first inbound TCP packets into the plurality of outbound TCP packets.

In some example embodiments, a computing device includes: means for receiving a plurality of inbound Transmission Control Protocol (TCP) packets, means for splitting a datapath including both receive endpoints and transmit endpoints into a first path and a second path, means for assigning first inbound TCP packets of the plurality of inbound TCP packets to the first path in response to determining that the first inbound TCP packets are associated with an established TCP connection and a data splicing group, means for assigning any inbound TCP packets not assigned to the first path to the second path, means for performing, using the first path, one-to-many data splicing of payload data from the first inbound TCP packets into a plurality of outbound TCP packets; and means for transmitting the plurality of outbound TCP packets.

In some example embodiments, a method for use in a computing device includes: receiving a plurality of inbound Transmission Control Protocol (TCP) packets, splitting a datapath including both receive endpoints and transmit endpoints into a first path and a second path, assigning first inbound TCP packets of the plurality of inbound TCP packets to the first path in response to determining that the first inbound TCP packets are associated with an established TCP connection and a data splicing group, assigning any inbound TCP packets not assigned to the first path to the second path, performing, using the first path, one-to-many data splicing of payload data from the first inbound TCP packets into a plurality of outbound TCP packets; and transmitting the plurality of outbound TCP packets.

In some example embodiments, a non-transitory computer readable medium tangibly embodies a program of instructions configured to be stored in a memory and executed by a processor, the computer readable medium includes: at least one instruction to receive a plurality of inbound Transmission Control Protocol (TCP) packets, at least one instruction to splitting a datapath including both receive endpoints and transmit endpoints into a first path and a second path, at least one instruction to assign first inbound TCP packets of the plurality of inbound TCP packets to the first path in response to determining that the first inbound TCP packets are associated with an established TCP connection and a data splicing group, at least one instruction to assign any inbound TCP packets not assigned to the first path to the second path, at least one instruction to perform, using the first path, one-to-many data splicing of payload data from the first inbound TCP packets into a plurality of outbound TCP packets; and at least one instruction to transmit the plurality of outbound TCP packets.

Any or all of the above example embodiments, and other example embodiments disclosed herein, may be used in some combinations.

### BRIEF DESCRIPTION OF THE DRAWINGS

Example embodiments will become more fully understood from the detailed description given herein below and the accompanying drawings, wherein like elements are represented by like reference numerals. The example embodiments are given by way of illustration only, and thus are not limiting of this disclosure.
FIG. 1 is a block diagram of a network configured to perform one-to-many Transmission Control Protocol (TCP) connection splicing, in accordance with example embodiments;
FIG. 2 is a thread-level representation of a fast path, in accordance with example embodiments;
FIG. 3 is a thread-level representation of a slow path, in accordance with example embodiments;
FIG. 4 is a block diagram illustrating packet replication and transmission with zero copy, in accordance with example embodiments;
FIG. 5 is a block diagram illustrating out-of-order packet handling with zero-copy, in accordance with example embodiments; and
FIG. 6 is a flowchart illustrating a method, in accordance with example embodiments.

It should be noted that these figures are intended to illustrate general characteristics of methods, structure and/or materials utilized in certain example embodiments, and to supplement the written description provided below. These drawings are not, however, to scale and may not precisely reflect the precise structural or performance characteristics of any given embodiment, and should not be interpreted as defining or limiting the range of values or properties encompassed by example embodiments. The use of similar or identical reference numbers in the drawings is intended to indicate the presence of a similar or identical element or feature.

### DETAILED DESCRIPTION

Some example embodiments will now be described more fully with reference to the accompanying drawings in which some example embodiments are shown.

Detailed illustrative embodiments are disclosed herein. However, specific structural and functional details disclosed herein are merely representative for purposes of describing example embodiments. The example embodiments may, however, be embodied in many alternate forms and combinations, and should not be construed as limited to only the embodiments set forth herein.

Furthermore, it should be understood that there is no intent to limit example embodiments to the particular forms disclosed. On the contrary, example embodiments cover all modifications, equivalents, and alternatives falling within the scope of this disclosure. Like numbers refer to like elements throughout the description of the figures. One or more example embodiments described herein may be combined.

A Transmission Control Protocol (TCP) protocol stack is designed for general-purpose usage, accommodating a wide variety of TCP applications that share the underlying TCP protocol stack. By contrast, some example embodiments disclosed herein may, but need not, be implemented in a tightly controlled server environment, for example in a dedicated appliance in which only one type of data splicing application is deployed and operational. An example of this is a publish-subscribe (PubSub) broker appliance. A typical PubSub broker maintains TCP connections with publisher and subscriber clients, communicating over a PubSub protocol, *e.g.,* a Message Queuing Telemetry Transport (MQTT) protocol. In general, a publisher client sends messages to a broker under a specific topic, while one or more subscriber clients subscribe to the topic and receive messages published under the topic through the broker. Therefore, the broker's role is to facilitate one-to-many data splicing across TCP connections established with the publisher and subscriber clients. In at least one example embodiment, performance and scalability may be enhanced in such a one-to-many TCP data splicing within a local server where a data splicing application is deployed. In example embodiments implemented in such specialized settings, the data splicing application and the TCP protocol stack may be tightly integrated and co-designed to increase the performance and scalability of data splicing. Example embodiments of some such implementations are described below, in the context of the various example embodiments.

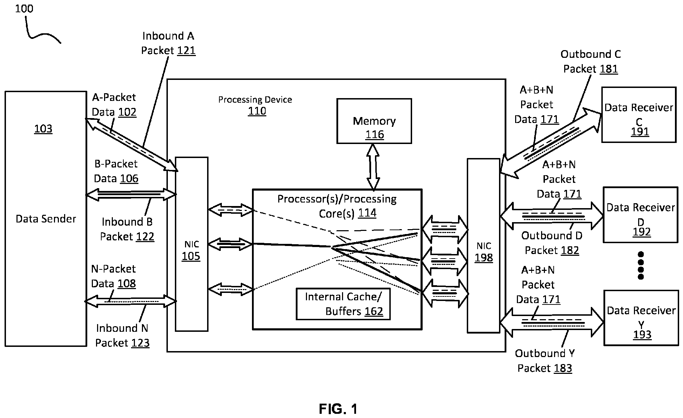

Referring first to FIG. 1, a block diagram of a network 100 configured to perform one-to-many Transmission Control Protocol (TCP) connection splicing will be discussed in accordance with example embodiments. Network 100 includes a processing device 110, a data sender, and multiple data receivers. Processing device 110 may be used to provide a commercial web-scale service that dynamically routes data from a single source to multiple consumer entities, a distributed storage system, a content delivery network (CDN), a videoconferencing system, or the like.

In various example embodiments, the processing device 110 is illustrated as including two network interface controllers (NICs), inbound NIC 105 and outbound NIC 198. However, the illustration of two NICs is for ease of explanation only, as a single NIC may perform both receive (RX) and transmit (TX) functions. Consequently, any reference to either inbound NIC 105 or outbound NIC 198 may be understood to be a reference to a single NIC performing the corresponding RX or TX function. The processor(s)/processing core(s) 114, may include internal cache/buffers 162, and memory 116. Note that in some example embodiments, use of multiple NICs is not precluded. The processor(s)/processing core(s) 114 may be implemented as multi-core processors configured to carry out instructions of a computer program by performing arithmetical, logical, and input/output operations of the system by processing multiple threads concurrently. Instructions may be provided to the processor(s)/processing core(s) 114 by the memory 116.

The memory 116 may be a computer readable storage medium that generally includes a random-access memory (RAM), read only memory (ROM), and/or a permanent/long-term mass storage device, such as a disk drive. The memory 116 may store an operating system and any other routines/modules/applications for providing the functionalities of processing device 110 to be executed by the processor(s)/processing core(s) 114. These software components may be loaded from a separate computer readable storage medium, e.g. a disc, tape, DVD/CD-ROM drive, memory card, another memory, or the like. In some example embodiments, software components may be loaded into the memory 116 via a communication interface, such as inbound NIC 105.

The data sender 103 provides data for delivery to multiple data receivers, which include Data Receiver C 191, Data Receiver D 192, through Data Receiver Y 193. Inbound A packets 121, including A-Packet data 102, inbound B packets 122 including B-Packet data 106, and inbound N packets 123, each of which includes N-Packet data 108. The processing core transmits packet data 102, 106, and 108, which is obtained from inbound packets 121, 122, and 123, to each of the multiple data receivers

The processing device 110 receives, at inbound NIC 105, inbound packets transmitted by the data sender 103, and inserts individual data items included in the inbound packets into each of multiple outgoing packets using the processor(s)/processing core(s) 114. The processing device 110 transmits the outgoing packets to each of the multiple data receivers using outbound NIC 198. In the illustrated example embodiment, each of the outbound packets, including Outbound C packet 181, Outbound D packet 182, and Outbound Y packet 183 includes A+B+N packet data 171.

Although not illustrated in FIG. 1, processing device 110 may also include various input output devices, such as a keyboard, a keypad, a mouse, a touch screen display, a speaker, or the like, may.

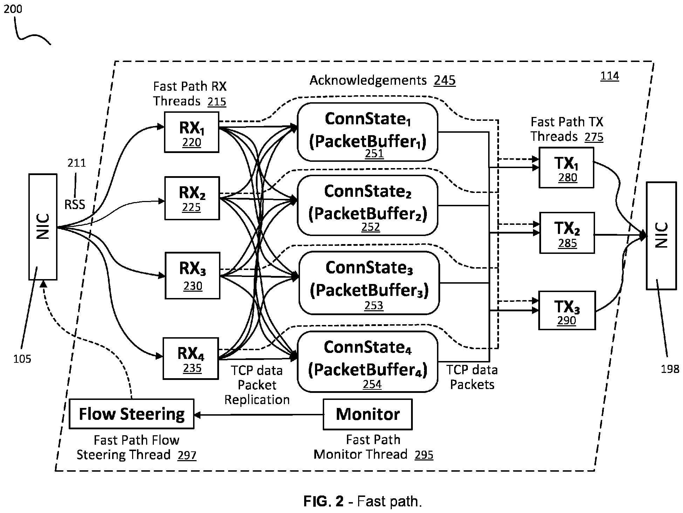

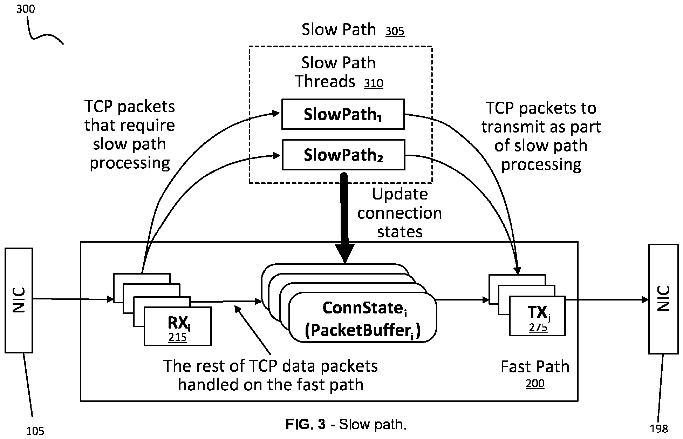

Referring to FIGS. 2 and 3, split cross-layer datapath processing will be discussed in accordance with various example embodiments. At least some example embodiments adopt a unified application-network datapath, in which TCP protocol stack processing is integrated into application-level data splicing. In example embodiments of this cross-layer design, there is no strict isolation between the protocol stack and application processes, which allows avoidance of the overhead associated with strict layering.

In some example embodiments, to allow a unified datapath to execute more efficiently on hardware having high CPU core density, the unified datapath is split into a fast path and a slow path. The fast path is optimized for low-overhead, common-case processing, while the slow path handles less frequent, more complex events within the unified datapath. Specifically, the fast path is dedicated to performing one-to-many data splicing across fully established TCP connections. The slow path deals with uncommon events occurring at both the TCP layer and the application layer. The term, "control functions" is used herein to refer to both TCP layer events and application layer events handled by the slow path. TCP-level slow path events include TCP three-way handshakes, packet retransmission upon retransmission timeout, and flow control. Application-layer slow path events involve handling application-specific control messages that affect data splicing on active TCP connections, such as handling connection, disconnection, subscription, unsubscribe requests in case of the MQTT application protocol.

Referring next to FIG. 2, a thread-level representation of a fast path 200 will be discussed in accordance with example embodiments.

In an example embodiment, the primary role of the fast path is one-to-N data splicing over TCP connections. The fast path operates under two assumptions: (1) active TCP connections have already been established with (*N* +1) network endpoints, and (2) a data splicing group has been formed among those endpoints, where one endpoint serves as a data sender and the other *N* endpoints as data receivers. When the fast path receives packets for flows that do not satisfy either condition, it delegates the processing of those packets to the slow path, which is discussed subsequently with reference to FIG. 3.

As illustrated in FIG. 2, the one-to-many data slicing is performed in Processor(s)/Processing Core(s) 114. In one example embodiment of a fast path implementation, there are four types of threads operating within the fast path 200 include: (i) Fast Path RX*ᵢ* Threads 215 (*e.g.*, RX₁ 220, RX₂ 225, RX₃ 230, and RX₄ 235), (ii) Fast Path TX*ᵢ* Threads 275 *(e.g.,* TX₁ 280, TX₂ 285, and TX₃ 290), (iii) Fast Path Monitor Thread 295, and (iv) Fast Path Flow Steering Thread 297. In example embodiments, each thread operates under the "run-to-completion" model, continuously cycling through tasks on a dedicated CPU core without preemption (e.g., Data Plane Development Kit Pole Mode Driver (DPDK PMD) thread). The Fast Path RX*ᵢ* Threads 215 and Fast Path TX*ᵢ* Threads 275 serve as the primary workers in the fast path, splicing received packets onto the appropriate TCP connections. There are *K* Fast Path RX*ᵢ* Threads 215 and *L* Fast Path TX*ᵢ* Threads 275, where *K* and *L* are adjustable based on traffic demands and the availability of central processing unit (CPU) cores (with *K*=4 and *L*=3 in the depicted scenario). Each RX*ᵢ* thread populates a table called *ConnStateᵢ* that stores the connection states of all TCP flows handled by Thread*ᵢ*. Each connection state has its own packet buffer created. Each packet buffer holds packets received, or to be transmitted, on a corresponding connection.

A connection state may include the TCP flow state (e.g., received TCP sequence number, last acknowledged sequence number, receive window size, round trip time (RTT) estimate, etc.) and the application-level state (e.g., whether a connection is associated with a data sender or a receiver, and a group of receiver connections in case of a data sender). The distribution of TCP flows among the *K* Fast Path RX*ᵢ* Threads 215 is determined by flow hash values calculated by the NIC's receive side scaling (RSS) 211. The *L* Fast Path TX*ᵢ* Threads 275 use the same flow hash values to distribute TX-related flow processing among themselves.

Upon receiving a data packet, an RX*ᵢ* thread consults the packet's connection state in its own *ConnStateᵢ* table and updates its TCP flow state as part of TCP-layer processing. Additionally, the RX*ᵢ* thread duplicates the packet based on data splicing group information, and stores the replicated packets in the packet buffers (e.g., Packet Buffers 251, 252, 253, or 254) of the destination connections as part of application-layer processing. Depending on the particular implementation, packet replication logic may be applied to the TX*ⱼ* threads, while the RX*ᵢ* thread simply stores the received packet in the packet sender's PacketBuffer. Each TX*ⱼ* thread then retrieves the stored data packets for flows that it handles from *K ConnStateᵢ* tables (*i*=1,...,*K*) and transmits the packets in accordance with the TCP flow control rate of each flow. The TX*ⱼ* thread is also responsible for transmitting TCP ACK packets and optional application-level acknowledgement messages 245 generated by the *K* RX*ᵢ* threads in response to incoming data packets.

In various example embodiments, the fast path issues data splicing acknowledgements for data received over sender-side TCP connections. Operating across the TCP and application layers, the fast path handles acknowledgements at both layers. At the TCP layer, the fast path may generate an ACK packet for each received data packet. Optionally, the fast path may combine multiple acknowledgements into a single ACK packet to improve performance. At the application layer, depending on the connected data sender's configuration, the fast path may produce an application-level acknowledgement for each received message. For example, in the MQTT protocol with Quality of Service (QoS) level 1, a 4-byte PUBACK message is sent as a response to each PUBLISH message received from a publisher client. When an acknowledgement message is generated, the TCP ACK flag may be tagged along with the message's TCP packet, eliminating separate ACK packets. In example embodiments described herein, the RX*ᵢ* threads in the fast path are tasked with generating acknowledgements at both layers, which are subsequently transmitted by the TX*ᵢ* threads.

Referring next to FIG. 3, a slow path 305 included in a divided datapath 300 will be discussed in accordance with example embodiments. In example embodiments, the slow path 305 handles uncommon events that occur at both the TCP layer and the application layer. TCP-level slow path events may include TCP three-way handshakes, packet retransmission upon retransmission timeouts, and flow control, while application-layer slow path events involve handling application-specific control messages that affect data splicing on active TCP connections, such as handling connection, disconnection, subscription, unsubscribe requests in case of the MQTT application protocol.. The following description provides additional detail regarding how these uncommon events are offloaded to, and handled by, the slow path 305.

Divided datapath 300 includes a slow path 305, which may include multiple slow path threads 310, and a fast path 200, which was previously discussed with reference to FIG. 2. The beginning and end of both the slow path 305 and the fast path 200 are inbound NIC 105 and outbound NIC 198.

With continued reference to FIG. 3, data splicing bootstrapping and teardown will be discussed in accordance with various example embodiments. At the TCP layer, each TCP flow handled on the server side (e.g., the processing device 110 in FIG. 1) goes through a series of state transitions from flow creation to flow termination: LISTEN → SYN_RECEIVED → ESTABLISHED for flow creation; ESTABLISHED → FIN_WAIT1 → FIN_WAIT2 → TIME_WAIT → CLOSED" for flow termination, where the termination is initiated on the server side upon receiving a disconnection request message from a data sender or a receiver. Any TCP packets that trigger state transitions before and/or after the ESTABLISHED state are handled by the slow path in some example embodiments. After a given TCP flow has reached the ESTABLISHED state, the two connected network endpoints exchange initial control messages over TCP to establish an application-level session for data splicing. In an example embodiment using the MQTT protocol, an MQTT client goes through a connection establishment stage, where it sends a CONNECT message to a broker, which then responds with a CONNACK message. Subsequently, if a client is a publisher (e.g., a data sender such as data sender 103 in FIG. 1), it starts sending PUBLISH messages carrying published data to the broker. Upon receiving the first PUBLISH message, the broker can identify the client as a publisher. If a client is a subscriber (e.g. a destination such as Data Receiver C 191 in FIG. 1), on the other hand, it sends a SUBSCRIBE message to the broker indicating the topic(s) it wants to subscribe to, from which the broker can identify the client as a subscriber. Given this workflow, TCP packets continue to be handled by the slow path until a remote network endpoint's role in data splicing is identified as either a data sender or a data receiver.

Conversely, on an active application-level session, a client can send control messages that will deactivate the session. For example, an MQTT client can send an UNSUBSCRIBE message to stop receiving messages and a DISCONNECT message for graceful session teardown. These control messages are typically identified from the fixed-size message header (e.g., message type in the 2-byte MQTT header), and hence may be detected from the fixed offset of the packet payload by the fast path and sent to the slow path as well.

In various example embodiments, to support the slow path processing discussed above, the RX*ᵢ* threads in the fast path check for the following types of packets received at inbound NIC 105, and send them to the slow path:
(1) TCP packets with any of the SYN/FIN/RST flags on;
(2) TCP packets for flows whose TCP state is not ESTABLISHED;
(3) TCP packets for flows which are not yet identified as a sender or a receiver in data splicing; and
(4) TCP packets that carry control messages that deactivate a splicing session for a specific sender or receiver.

With continued reference to FIG. 3, TCP congestion control and retransmission will be discussed in accordance with example embodiments. In accordance with some example embodiments, TCP congestion control includes adjusting a congestion window, or sending rate of a flow, based on congestion signals such as duplicate ACK packets, packet losses, ECN-marked packets, variations in RTT, and bandwidth estimates.

In some example embodiments TCP congestion control is delegated to the slow path 305, instead of being handled on a per-ACK basis as part of the main packet processing logic. More specifically, the slow path 305 periodically iterates over all active TCP connections associated with data receivers and adjusts the congestion control state of each flow. The frequency of congestion control execution for each flow is adjusted based on the flow's current RTT estimate, which is already computed and stored in *ConnStateᵢ* by the Fast Path RX*ᵢ* Threads 215 while handling TCP ACK packets from receiver-side TCP connections. While iterating through the connections, the slow path also checks for retransmission timeouts and triggers packet retransmissions by notifying the Fast Path TX*ᵢ* Threads 275. Note that a retransmission timeout (RTT) value is typically set based on the RTT scale.

As part of slow path processing, the slow path 305 may generate TCP control packets (e.g., SYN/ACK packet) or data packets that carry application-level messages (e.g., CONNACK message for the MQTT protocol). Once these packets are generated by the slow path, they are transmitted by the Fast Path TX*ᵢ* Threads 275. Depending on implementations, transmission of these packets can be performed by the slow path itself.

Various example embodiments employ dynamic load rebalancing to dynamically adjust CPU core assignments among the fast path 200 and the slow path 305 based on varying traffic patterns. For example, if the data splicing rates are high, but the data splicing patterns remain stable (e.g., the receivers stay the same), overhead on the slow path will be relatively low. In such a scenario, the fast path may be allocated more CPU cores to maintain the pace with the data splicing rate. On the other hand, if there is a high level of dynamism in data splicing patterns while the overall data rates are low, more CPU cores may be allocated to the slow path to manage the churn in data splicing groups.

Another aspect of load rebalancing relates to distributions of TCP flows within the fast path. The NIC's RSS-driven flow distribution may result in an unbalanced load across different CPU cores during fast path processing. Example embodiments address this issue of load imbalance as follows. First, each RX*ᵢ* thread monitors its own CPU utilization and maintains a list of the top-*K* flows in terms of flow rate among the flows assigned to it. An RX*ᵢ* thread may maintain a set of top-*K* flows with minimal memory/processing overhead using a space saving algorithm, which is known to those of ordinary skill in the art. Utilizing the information about the top-K flows, a main thread, such as the fast path monitor thread 295 (FIG. 2) periodically checks for any unbalanced CPU utilization among RX*ᵢ* threads and performs flow redistribution. This redistribution involves installing specialized flow steering rules in the inbound NIC 105 to override its RSS-based steering, and move the top-*k* largest flows from the most overloaded CPU core to the least busy core, along with migrating their flow states. Here, *k* (*k < K*) represents the number of flows to migrate in each monitoring cycle. In the most cautious scenario, *k* can be set to one, minimizing the overhead of flow redistribution within the fast path. In at least one example embodiment, installation of flow rules is delegated to a dedicated offload thread, such as the Fast Path Flow Steering thread 297, as depicted in FIG. 3.

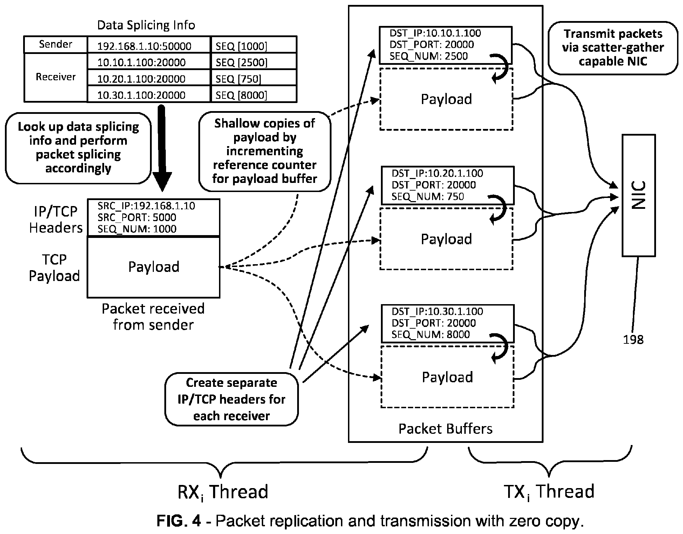

Referring next to FIG. 4, a block diagram illustrating packet replication and transmission with zero copy will be discussed in accordance with example embodiments. In particular, FIG. 4 illustrates an example scenario of where data splicing occurs across four TCP connections. Data received from a data sender 192.168.1.10:50000 is spliced onto three destination connections representing three data receivers: 10.10.1.100:20000, 10.20.1.100:2000, and 10.30.1.100:20000. The fast path maintains data splicing states about the sender/receiver connections, which include IP address and port number, as well as the last TCP sequence number used for splicing. Upon receiving a data packet from the sender, an RX*ᵢ* thread removes the TCP/IP header from the packet and creates three shallow copies of the packet payload without performing an actual memory copy (i.e., it increments the reference counter for the payload memory buffer by three). It then generates three separate TCP/IP headers for the three destinations by consulting the data splicing states and attaches the replicated payload under each TCP/IP header. This process results in three packets, each containing the cloned payload attached to a distinct packet header. These chained packets are stored in the packet buffers of the destination connections, retrieved by respective TX*i* thread(s), and are finally sent to the outbound NIC 198 for transmission. In at least one example embodiment, the outbound NIC 198 is equipped with scatter-gather capability, allowing the outbound NIC 198 to combine a header and payload stored in non-contiguous memory buffers and transmit them as a complete packet. Additional shallow copies may be utilized to retain the packets in the packet buffers after their transmission in case the packets may need to be retransmitted due to packet losses.

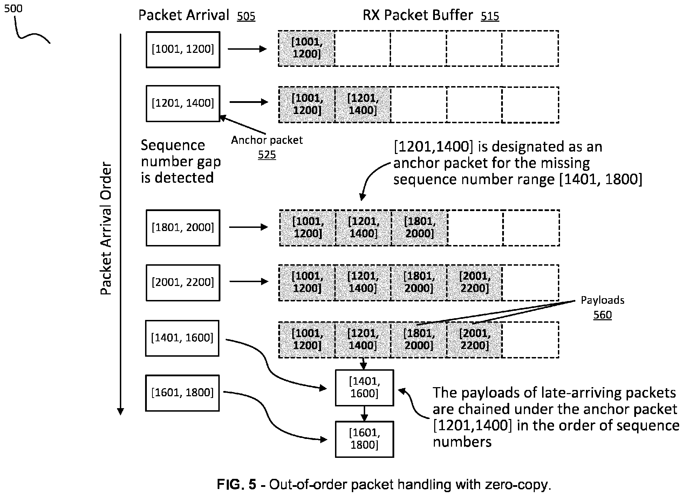

Referring next to FIG. 5, a block diagram 500 illustrating out-of-order packet handling with zero-copy will be discussed in accordance with example embodiments. An intrinsic responsibility of the TCP protocol stack includes handling out-of-order packet arrivals. In the context of splicing, even when packets arrive out-of-order on a sender-side TCP connection (for instance, a packet with sequence number *N* +*δ* arrives before one with sequence number *N* ), the packets must be spliced into corresponding receiver-side connections in an ordered sequence. This is so that any sender-side congestion or packet loss does not propagate to all receiver-side connections.

To allow out-of-order packets to be spliced into corresponding receiver-side connections in an ordered sequence while maintaining zero-copy overhead, various example embodiments manage out-of-order packet arrivals as illustrated in FIG. 5. The number range displayed in each packet arrival (e.g., [1001,1200]) denotes a TCP sequence number range for a corresponding packet payload 560. When packets arrive in sequence (e.g., [1001, 1200], [1201, 1400]), which is the typical case, their pointers are stored consecutively in a packet buffer. Upon the arrival of the first out-of-order packet (e.g., [1801,2000]), it is placed in the next consecutive position as usual, but this action triggers the packet [1201,1400] in the packet buffer to be labeled as an anchor packet 525 for the absent sequence number range [1401,1800]. This anchor packet 525 acts as a placeholder packet, under which the payloads 560 of subsequent late-arriving packets for [1401,1800] are linked. As shown in FIG. 5, when the packets [1401,1600] and [1601,1800] later arrive, their payloads 560 are linked under the anchor packet 525 [1201,1400]. After the missing sequence ranges are completed, the labeling of the anchor packet 525 [1201,1400] is removed. If out-of-order packets are frequent, multiple anchor packets may be active simultaneously. For example, in this scenario, if a packet [2601,2800] arrives between [1401,1600] and [1601,1800], it would trigger another anchor packet [2001,2200] for a newly missing range [2201,2600]. In essence, each anchor packet 525 is responsible for collecting packets for a distinct contiguous missing sequence number range. Once packets are organized in this manner within the packet buffer, they are replicated and transmitted as previously described. The linked payloads 560 can be combined via the NIC's scatter-gather offload for transmission. If the combined packet exceeds the Maximum Transmission Unit (MTU) size, the packet may also be segmented by the NIC's Transmit Segmentation Offload (TSO) for transmission.

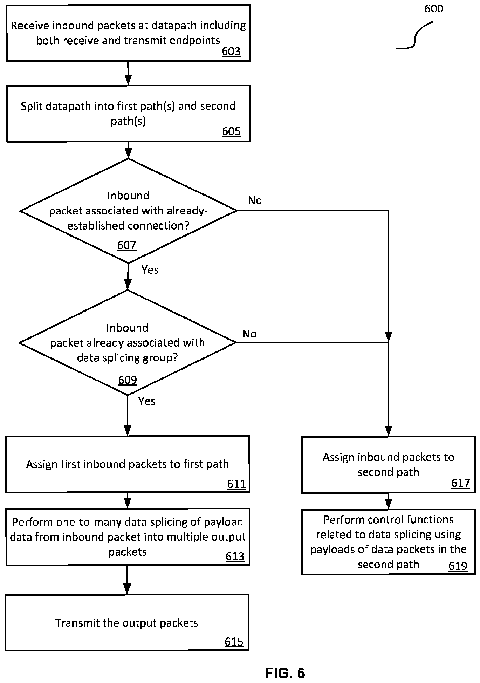

Referring next to FIG. 6 a method 600 will be discussed in accordance with example embodiments. As illustrated by block 603, a processing device 110 receives inbound packets at a datapath, where the datapath includes both receive endpoints, e.g. at inbound NIC 105, and ending with transmit endpoints, *e.g.* at outbound NIC 198, as shown in FIG. 1. In some embodiments, the datapath corresponds to split datapath 300 (FIG. 3).Each of the inbound packets includes payload data.

As illustrated by block 605, the processing device 110 splits the datapath into a first path, for example, fast path 200 (FIGS. 2 and 3), and a second path, for example, slow path 305 (FIG. 3).

As illustrated by block 607, processing device 110 checks each inbound packet to determine whether the inbound packet is associated with an already-established connection. In at least one example embodiment, the check at block 607 is a TCP-level check in which RX*ᵢ* threads in the first (e.g., fast) path check each received packet to determine if the received packet has a flow state, sometimes referred to herein as a connection state, of "Established". If the result of the check at block 607 indicates that the inbound packet is associated with an already-established connection, the method 600 proceeds to block 609

As illustrated by block 609, processing device 110 performs a check to determine whether the inbound packet is also associated with an already established data splicing group. In some example embodiments, the check at block 609 is an application-level check performed by the fast path RX*ᵢ* threads, and the data splicing group refers to an association between a data sender and one or more data receivers. See the discussion of FIG. 3 for additional details.

If the checks at block 607 and 609 indicate that the inbound packet is associated with a data splicing group and an already established connection, the processing device 110 assigns the packet assigned to the first path (e.g., the fast path), as illustrated by block 611.

As illustrated by block 613, if the inbound packet is assigned to the first path, the processing device performs one-to-many data splicing, in which the payload included in the inbound packet is inserted into multiple output packets.

As illustrated by block 615, the processing device 110 then transmits the multiple output packets to their destinations.

Returning to blocks 607 and 609, if the check at block 607 indicates that the inbound packet is not associated with an already-established connection, or if the check at block 609 indicates that the inbound packet is not associated with an established data splicing group, then as illustrated by block 617 the processing device 110 assigns the inbound packet to the second path. In various example embodiments, inbound packets are also assigned to the second path if the packet includes state-transition information. See the discussion of FIG. 3 for additional details.

In at least some example embodiments, packets assigned to the second path at block 617 are considered to include control information, for example state transition information. As illustrated by block 619, the second (e.g., slow) path is used to perform control functions related to data splicing using payloads of data packets assigned to the second path. See the discussion of FIG. 3 for additional details.

Various non-limiting illustrative embodiments will be discussed here. Illustrative embodiment 1 includes at least one network interface controller configured to receive a plurality of inbound Transmission Control Protocol (TCP) packets, and transmit a plurality of outbound TCP packets; a memory configured to store a program of instructions; and at least one processor including one or more cores, the at least one processor being coupled to the at least one network interface controller and the memory, the at least one processor being configured to execute the program of instructions to split a datapath including both receive endpoints and transmit endpoints within the computing device into a first path and a second path, assign first inbound TCP packets to the first path in response to determining that the first inbound TCP packets are associated with an established TCP connection and a data splicing group, assign second inbound TCP packets not assigned to the first path to the second path, and perform, using the first path, one-to-many data splicing, of payload data from the first inbound TCP packets into the plurality of outbound TCP packets.

Illustrative embodiment 2 includes the computing device as in illustrative embodiment 1, wherein the at least one processor is further configured to execute the program of instructions to perform the one-to-many data splicing using zero-copy, network-interface controller assisted data splicing.

Illustrative embodiment 3 includes the computing device as in any of illustrative embodiments 1 or 2, wherein the at least one processor is further configured to execute the program of instructions to: maintain a connection state buffer including information indicating sender-receiver connections; use a receive thread included in the first path to remove headers from the first inbound TCP packets; store shallow copies of payloads of the first inbound TCP packets in a packet buffer; generate distinct headers for the plurality of outbound TCP packets based on the information indicating sender-receiver connections; attach the distinct headers to the shallow copies in the packet buffer; use a transmit thread included in the first path to retrieve the distinct headers and the shallow copies from the packet buffer; and wherein the at least one network interface controller is configured to assemble and transmit the distinct headers and the shallow copies as multiple complete TCP packets.

Illustrative embodiment 4 includes the computing device of any of any of illustrative embodiments 1-3, wherein the at least one processor is further configured to execute the program of instructions to implement a cross-layer application-network datapath integrating TCP protocol stack-processing into application-level data splicing.

Illustrative embodiment 5 includes the computing device as in any of illustrative embodiments 1-4, wherein the at least one processor is further configured to execute the program of instructions to use receive threads included in the first path to transfer processing of a particular inbound TCP packet to the second path in response to determining that the particular inbound TCP packet satisfies any one of the following conditions: includes an active TCP SYN flag, FIN Flag, or TCP RST flag, is associated with a flow that has not been established, is associated with a flow not yet identified as a data-splicing sender or receiver, or carries a control message that triggers adding or removing a data splicing sender or receiver in an existing data splicing session.

Illustrative embodiment 6 includes the computing device as in any of claims 1-5, wherein the at least one processor is further configured to execute the program of instructions to: monitor utilization of the second path and the first path; and scale the utilization of the second path and the first path independently by adjusting respective processor core assignments.

Illustrative embodiment 7 includes the computing device as in any of illustrative embodiments 1-6, wherein the at least one processor is further configured to execute the program of instructions to:
incrementally redistribute flows assigned to the first path among a plurality of processing cores in response to detecting an unbalanced utilization of the plurality of processing cores.

Illustrative embodiment 8 includes the computing device as in any of illustrative embodiments 1-7, wherein the at least one processor is further configured to execute the program of instructions to: implement flow steering rules in the network interface controller to move a first number of largest TCP flows from a more congested processing core to a less busy core; and migrate flow states corresponding to the first number of largest TCP flows from a first connection state buffer to a second connection state buffer.

Illustrative embodiment 9 includes the computing device as in any of any of illustrative embodiments 1-8, wherein the at least one processor is further configured to execute the program of instructions to use the second path to perform a plurality of control functions related to data splicing being performed by the first path across network and application layers.

Illustrative embodiment 10 includes the computing device as in any of illustrative embodiments 1-9, wherein the at least one processor is further configured to execute the program of instructions to iterate through established TCP connections and adjust a congestion control state of each flow, wherein a frequency of adjusting the congestion control state of each particular flow is determined based on a current round-trip-time estimate of the particular flow.

Illustrative embodiment 11 includes the computing device of illustrative embodiment 10, wherein the at least one processor is further configured to execute the program of instructions to: use the second path to detect retransmission timeouts; and trigger packet retransmissions by notifying transmit threads included in the first path.

Illustrative embodiment 12 includes the computing device as in any of illustrative embodiments 1-11, wherein the at least one processor is further configured to execute the program of instructions to process out of order arrivals of one or more inbound TCP packets by using TCP packets received out-of-order as anchor packets for late arriving TCP packets; linking later arriving TCP packets to the anchor packet; store shallow copies of a plurality of different payloads of the first inbound TCP packets in non-contiguous locations of a packet buffer; attach the shallow copies of the plurality of different payloads to a single distinct header; use a transmit thread included in the first path to retrieve the single distinct header and the shallow copies of the plurality of different payloads from the packet buffer; and the at least one network interface controller is configured to retrieve a TCP packet header from the packet buffer, retrieve shallow copies of payloads associated with the TCP packet header from the non-contiguous locations in the packet buffer; and assemble and transmit a complete TCP packet.

Illustative embodiment 13 includes a method comprising: receiving a plurality of inbound Transmission Control Protocol (TCP) packets, splitting a datapath including both receive endpoints and transmit endpoints into a first path and a second path, assigning first inbound TCP packets of the plurality of inbound TCP packets to the first path in response to determining that the first inbound TCP packets are associated with an established TCP connection and a data splicing group, assigning any inbound TCP packets not assigned to the first path to the second path, performing, using the first path, one-to-many data splicing of payload data from the first inbound TCP packets into a plurality of outbound TCP packets; and transmitting the plurality of outbound TCP packets.

Illustrative embodiment 14 includes the method as in illustrative embodiment 13, further comprising: maintaining a connection state buffer including information indicating sender-receiver connections; storing shallow copies of data extracted from the first inbound TCP packets in a packet buffer; using a receive thread included in the first path to store outbound TCP packet header information and information associating the outbound TCP packet header information with particular shallow copies of the data extracted from the first inbound TCP packets; using a transmit thread included in the first path to obtain the outbound TCP packet header information and the particular shallow copies; and assembling the outbound TCP packet header information and the particular shallow copies to generate the plurality of outbound TCP packets.

Illustrative embodiment 15 includes the method as in any of illustrative embodiments 13 or 14, further comprising: processing out of order arrivals of one or more inbound TCP packets by: designating TCP packets received out-of-order as anchor packets for late arriving TCP packets; and linking later arriving TCP packets to the anchor packet.

One or more functions associated with the methods and/or processes described herein can be implemented as a large-scale system that is operable to receive, transmit and/or process data on a large-scale. As used herein, a large-scale refers to a large number of data, such as one or more kilobytes, megabytes, gigabytes, terabytes or more of data that are received, transmitted and/or processed. Such receiving, transmitting and/or processing of data cannot practically be performed by the human mind on a large-scale within a reasonable period of time, such as within a second, a millisecond, microsecond, a real-time basis, or other high speed required by the machines that generate the data, receive the data, convey the data, store the data and/or use the data.

One or more functions associated with the methods and/or processes described herein can require data to be manipulated in different ways within overlapping time spans. The human mind is not equipped to perform such different data manipulations independently, contemporaneously, in parallel, and/or on a coordinated basis within a reasonable period of time, such as within a second, a millisecond, microsecond, a real-time basis or other high speed required by the machines that generate the data, receive the data, convey the data, store the data and/or use the data.

One or more functions associated with the methods and/or processes described herein can be implemented in a system that is operable to electronically receive digital data via a wired or wireless communication network and/or to electronically transmit digital data via a wired or wireless communication network. Such receiving and transmitting cannot be practically performed by the human mind because the human mind is not equipped to electronically transmit or receive digital data, let alone to transmit and receive digital data via a wired or wireless communication network.

One or more functions associated with the methods and/or processes described herein may operate to cause an action by a processing module directly in response to a triggering event -- without any intervening human interaction between the triggering event and the action. Any such actions may be identified as being performed "automatically", "automatically based on" and/or "automatically in response to" such a triggering event. Furthermore, any such actions identified in such a fashion specifically preclude the operation of human activity with respect to these actions - even if the triggering event itself may be causally connected to a human activity of some kind.

One or more functions associated with the methods and/or processes described herein may be implemented in a system that is operable to electronically store digital data in a memory device. Such storage cannot be practically performed by the human mind because the human mind is not equipped to electronically store digital data.

As discussed herein, the terminology "one or more" and "at least one" may be used interchangeably.

Although the terms first, second, etc. may be used herein to describe some elements, these elements should not be limited by these terms. These terms are only used to distinguish one element from another. For example, a first element could be termed a second element, and similarly, a second element could be termed a first element, without departing from the scope of this disclosure. As used herein, the term "and/or," includes any and all combinations of one or more of the associated listed items.

When an element is referred to as being "connected," or "coupled," to another element, it can be directly connected or coupled to the other element or intervening elements may be present. By contrast, when an element is referred to as being "directly connected," or "directly coupled," to another element, there are no intervening elements present. Other words used to describe the relationship between elements should be interpreted in a like fashion (*e.g.,* "between," versus "directly between," "adjacent," versus "directly adjacent," etc.).

The terminology used herein is for the purpose of describing particular embodiments only and is not intended to be limiting. As used herein, the singular forms "a," "an," and "the," are intended to include the plural forms as well, unless the context clearly indicates otherwise. It will be further understood that the terms "comprises," "comprising," "includes," and/or "including," when used herein, specify the presence of stated features, integers, steps, operations, elements, and/or components, but do not preclude the presence or addition of one or more other features, integers, steps, operations, elements, components, and/or groups thereof.

It should also be noted that in some alternative implementations, the functions/acts noted may occur out of the order noted in the figures. For example, two figures shown in succession may in fact be executed substantially concurrently or may sometimes be executed in the reverse order, depending upon the functionality/acts involved.

Specific details are provided in the preceding description to provide a thorough understanding of example embodiments. However, it will be understood by one of ordinary skill in the art that example embodiments may be practiced without these specific details. For example, systems may be shown in block diagrams so as not to obscure the example embodiments in unnecessary detail. **In** other instances, well-known processes, structures, and techniques may be shown without unnecessary detail in order to avoid obscuring example embodiments.

As discussed herein, illustrative embodiments have been described with reference to acts and symbolic representations of operations (*e.g.,* in the form of flow charts, flow diagrams, data flow diagrams, structure diagrams, block diagrams, etc.) that may be implemented as program modules or functional processes include routines, programs, objects, components, data structures, etc., that perform particular tasks or implement particular abstract data types and may be implemented using existing hardware at, for example, existing user equipment or other network elements and/or hardware. Such existing hardware may be processing or control circuitry such as, but not limited to, one or more processors, one or more Central Processing Units (CPUs), one or more controllers, one or more arithmetic logic units (ALUs), one or more digital signal processors (DSPs), one or more microcomputers, one or more field programmable gate arrays (FPGAs), one or more System-on-Chips (SoCs), one or more programmable logic units (PLUs), one or more microprocessors, one or more Application Specific Integrated Circuits (ASICs), or any other device or devices capable of responding to and executing instructions in a defined manner.

Although a flow chart may describe the operations as a sequential process, many of the operations may be performed in parallel, concurrently, or simultaneously. In addition, the order of the operations may be re-arranged. A process may be terminated when its operations are completed, but may also have additional steps not included in the figure. A process may correspond to a method, function, procedure, subroutine, subprogram, etc. When a process corresponds to a function, its termination may correspond to a return of the function to the calling function or the main function.

As disclosed herein, the term "storage medium," "computer readable storage medium" or "non-transitory computer readable storage medium" may represent one or more devices for storing data, including read only memory (ROM), random access memory (RAM), magnetic RAM, core memory, magnetic disk storage mediums, optical storage mediums, flash memory devices and/or other tangible machine-readable mediums for storing information. The term "computer-readable medium" may include, but is not limited to, portable or fixed storage devices, optical storage devices, and some other mediums capable of storing, containing, or carrying instruction(s) and/or data.

Furthermore, example embodiments may be implemented by hardware, software, firmware, middleware, microcode, hardware description languages, or any combination thereof. When implemented in software, firmware, middleware or microcode, the program code or code segments to perform the necessary tasks may be stored in a machine or computer readable medium such as a computer readable storage medium. When implemented in software, a processor or processors will perform the necessary tasks. For example, as mentioned above, according to one or more example embodiments, at least one memory may include or store computer program code, and the at least one memory and the computer program code may be configured to, with at least one processor, cause a network element or network device to perform the necessary tasks. Additionally, the processor, memory, and example algorithms, encoded as computer program code, serve as means for providing or causing performance of operations discussed herein.

The hardware used to implement various example embodiments may include processing or control circuitry such as, but not limited to, one or more processors, one or more CPUs, one or more controllers, one or more ALUs, one or more DSPs, one or more microcomputers, one or more FPGAs, one or more SoCs, one or more PLUs, one or more microprocessors, one or more ASICs, or any other device or devices capable of responding to and executing instructions in a defined manner.

A code segment of computer program code may represent a procedure, function, subprogram, program, routine, subroutine, module, software package, class, or any combination of instructions, data structures or program statements. A code segment may be coupled to another code segment or a hardware circuit by passing and/or receiving information, data, arguments, parameters, or memory contents. Information, arguments, parameters, data, etc. may be passed, forwarded, or transmitted via any suitable technique including memory sharing, message passing, token passing, network transmission, etc.

The terms "including" and/or "having," as used herein, are defined as comprising (*i.e.,* open language). The term "coupled," as used herein, is defined as connected, although not necessarily directly, and not necessarily mechanically. Terminology derived from the word "indicating" (*e.g.,* "indicates" and "indication") is intended to encompass all suitable techniques available for communicating or referencing the object/information being indicated. Some, but not all, examples of techniques available for communicating or referencing the object/information being indicated include the conveyance of the object/information being indicated, the conveyance of an identifier of the object/information being indicated, the conveyance of information used to generate the object/information being indicated, the conveyance of some part or portion of the object/information being indicated, the conveyance of some derivation of the object/information being indicated, and the conveyance of some symbol representing the object/information being indicated.

Benefits, other advantages, and solutions to problems have been described above with regard to specific embodiments of the invention. However, the benefits, advantages, solutions to problems, and any element(s) that may cause or result in such benefits, advantages, or solutions, or cause such benefits, advantages, or solutions to become more pronounced are not to be construed as a critical, required, or essential feature or element of any or all the claims.

## Claims

1. A computing device comprising:
means for receiving (603) a plurality of inbound Transmission Control Protocol
(TCP) packets, and
transmit a plurality of outbound TCP packets;
means for splitting (605) a datapath including both receive endpoints and transmit endpoints within the computing device into a first path and a second path,
means for assigning (611) first inbound TCP packets to the first path in response to determining (609) that the first inbound TCP packets are associated with an established TCP connection and a data splicing group,
means for assigning (617) second inbound TCP packets not assigned to the first path to the second path, and
means for performing (613), using the first path, one-to-many data splicing, of payload data from the first inbound TCP packets into the plurality of outbound TCP packets.

2. The computing device of claim 1, further comprising
means for performing the one-to-many data splicing using zero-copy, network-interface controller assisted data splicing.

3. The computing device of claim 2, further comprising
means for maintaining a connection state buffer including information indicating sender-receiver connections.

4. The computing device of claim 3, further comprising:
means for using a receive thread included in the first path to remove headers from the first inbound TCP packets;
means for storing shallow copies of payloads of the first inbound TCP packets in a packet buffer;
means for generating distinct headers for the plurality of outbound TCP packets based on the information indicating sender-receiver connections; and
means for attaching the distinct headers to the shallow copies in the packet buffer.

5. The computing device of claim 4, further comprising:
means for using a transmit thread included in the first path to retrieve the distinct headers and the shallow copies from the packet buffer; and
means for assembling and transmitting the distinct headers and the shallow copies as multiple complete TCP packets.

6. The computing device of any of claims 1-5, further comprising
means for implementing a cross-layer application-network datapath integrating TCP protocol stack-processing into application-level data splicing.

7. The computing device of any of claims 1-6, further comprising
means for using receive threads included in the first path to transfer processing of a particular inbound TCP packet to the second path in response to determining that the particular inbound TCP packet satisfies any one of the following conditions:
includes an active TCP SYN flag, FIN Flag, or TCP RST flag,
is associated with a flow that has not been established,
is associated with a flow not yet identified as a data-splicing sender or receiver, or
carries a control message that triggers adding or removing a data splicing sender or receiver in an existing data splicing session.

8. The computing device of any of claims 1-7, further comprising
means for monitoring utilization of the second path and the first path; and
means for scaling the utilization of the second path and the first path independently by adjusting respective processor core assignments.

9. The computing device of claim 8, further comprising
means for incrementally redistributing flows assigned to the first path among a plurality of processing cores in response to detecting an unbalanced utilization of the plurality of processing cores.

10. The computing device of claim 9, further comprising
means for implementing flow steering rules in the network interface controller to move a first number of largest TCP flows from a more congested processing core to a less busy core; and
means for migrating flow states corresponding to the first number of largest TCP flows from a first connection state buffer to a second connection state buffer.

11. The computing device of any of claims 1-10, further comprising
means for using the second path to perform a plurality of control functions related to data splicing being performed by the first path across network and application layers.

12. The computing device of any of claims 1-11, further comprising
means for iterating through established TCP connections and adjust a congestion control state of each flow, wherein a frequency of adjusting the congestion control state of each particular flow is determined based on a current round-trip-time estimate of the particular flow.

13. The computing device of any of claims 1-12, further comprising:
means for using the second path to detect retransmission timeouts; and
means for triggering packet retransmissions by notifying transmit threads included in the first path.

14. A method (600) for use in a computing device, the method comprising:
receiving (603) a plurality of inbound Transmission Control Protocol (TCP) packets,
splitting (605) a datapath including both receive endpoints and transmit endpoints into a first path and a second path,
assigning (611) first inbound TCP packets of the plurality of inbound TCP packets to the first path in response to determining (609) that the first inbound TCP packets are associated with an established TCP connection and a data splicing group,
assigning (617) any inbound TCP packets not assigned to the first path to the second path,
performing (613), using the first path, one-to-many data splicing of payload data from the first inbound TCP packets into a plurality of outbound TCP packets; and
transmitting (615) the plurality of outbound TCP packets.

15. A computer readable medium tangibly embodying a program of instructions configured to be stored in a memory and executed by a processor, the computer readable medium including:
at least one instruction to receive (603) a plurality of inbound Transmission Control Protocol (TCP) packets,
at least one instruction to splitting (605) a datapath including both receive endpoints and transmit endpoints into a first path and a second path,
at least one instruction to assign (611) first inbound TCP packets of the plurality of inbound TCP packets to the first path in response to determining (609) that the first inbound TCP packets are associated with an established TCP connection and a data splicing group,
at least one instruction to assign (617) any inbound TCP packets not assigned to the first path to the second path,
at least one instruction to perform (613), using the first path, one-to-many data splicing of payload data from the first inbound TCP packets into a plurality of outbound TCP packets; and
at least one instruction to transmit (615) the plurality of outbound TCP packets.
